# EUROPEAN PATENT SPECIFICATION

(11) **EP 2 471 189 B1**
(45) Date of publication and mention of the grant of the patent: **14.03.2018**
(21) Application number: 10765470.9
(22) Date of filing: 24.08.2010
(51) Int. Cl.: H04B 3/54

(54) **ETHERNET OVER POWER**
ETHERNET-OVER-POWER (EOP)
ETHERNET SUR COURANT PORTEUR

(30) Priority: 24.08.2009 GB 0914681
(43) Date of publication of application: 04.07.2012
(73) Proprietor: Hughes Electronics Limited, London SE1 1EG (GB)
(72) Inventor: HUGHES, Glyn, London SE1 1EG (GB)
(74) Representative: Fry, David John
(86) International application number: PCT/GB2010/001593
(87) International publication number: WO 2011/023944

(56) References cited:
- EP-A1- 0 814 393
- WO-A1-2007/032548
- WO-A1-2008/032878
- WO-A1-2009/097400
- WO-A2-2004/054117
- US-A1- 2004 227 622

## Description

### Field of the Invention

The present invention concerns improvements in and relating to Ethernet- over-Power and provides communication to and from the powerline hardware, e.g. power sockets, and through the powerline itself.

### Background to the Invention

Ethernet-over-Power adaptors, or Internet Protocol (IP) -over-power adaptors as they are alternatively known, have been in existence for the past 20 years. Such adaptors plug into power sockets and modulate low voltage data signals in order that they can be transmitted along medium voltage power cabling thereby providing an opportunity to reduce the need for dedicated (twisted pair) data cabling to be installed/ used and providing a more secure alternative or supplement to wireless data transmission in Local Area Network (LAN) systems. Electrical cable is generally more stable than twisted pair cable and has the potential to offer great benefits Some grand IP-over-Power proposals have also been made in the company side of the electricity system where the cables are much thicker and adapted to carry electricity at over 1 kV. These were either Wide Area Networks or local to the supplier only and so far have only had limited take-up.

Though ethernet-over-Power systems have had little uptake initially, there are now a number of limited scope LAN systems in use in the domestic/ small office market sector. These mostly comprise a plurality of plug-in Ethernet adaptors each having the form of an electrical plug to be inserted into a ring mains socket (240V three pin wall-mounted socket in the UK) to inject data-streams into the ring mains power supply network of the home or office and facilitate communication thereby to and from the appliances connected to them. Such systems do not, however, serve more than a very localized area within the ring main and are not equipped to serve any power management functions.

The applicants of the present application have developed a new system that can operate as an Ethernet over Power system but also as an energy management system. An objective of the present invention is to utilize a single infrastructure for all transmission applications, power or data, and reduce the financial and ecological impact of buildings. A further, primary, objective is to unlock the communication potential of power cable to monitor and analyse the very energy that it propagates, in order to remotely manage and conserve energy within the building.

Objectives include: a) to create a system for efficiently controlling and managing the use of electrical energy; and b) to create communication with and or control diverse devices attached to the power line,

The combination of inventions disclosed in the present application seeks to create a unified communications system, the 'central nervous system' of intelligent buildings, principally by harnessing the communications potential of power cable indigenous to every building, (and whose network reaches to the heart of every electrically powered device) but also compatible with and able to communicate through any other physical layer (1) standard of OSI model such as, but not limited to, Fibre, Coaxial or Twisted Pair and or any Wireless Access Platform for Electronic Communications Services Management (WAPECS) band or Bluetooth or Infra Red or any other wireless communication standard.

Whereas limited scope PLC data communications networks exist that use plug in adaptors these are uni-functional and generally inefficient. Energy monitoring and information systems- (smart metering systems) - do also exist but are limited in scope to either whole house or single appliance information and existing control systems designed to switch on/off addressed sockets are all very limited in scope, as are existing systems designed to mitigate energy use by allowing the user to turn off the socket through infrared during standby.

None of the existing Ethernet-over-Power systems are able to satisfy multiple system applications and problems of the above type and users are generally left opting for one set of functionality or another. Accordingly it is an object of the present invention to provide a multi-functional system that brings together combinations of a data communications system, an energy monitoring and control system, an energy saving system, preferably even a fire safety system, and a communications network that provides a physical layer platform between all Ethernet based devices.

Existing systems have been uni-functional in part because user datacomm transmission and energy and control transmissions each have different transmission sources and there can only be one comms chipset in any plug or socket otherwise it would be too expensive to produce and there would be transmission conflicts between the two comms microprocessors. Notably for this reason, other than PLC plug in adaptors, none of the existing intelligent sockets have RJ45 interfaces. The same problem exists at a lower level - two data sources in conflict attempting to communicate with one comms microprocessor. Systems to date therefore have been designed with one data source in mind and that along with the design intention of solving a single problem has made them essentially uni-functional. To access even a major part of the different functionalities of existing uni-functional systems would necessitate at least two but possibly three different systems to be installed in a user's premises, the expense and logistics of which would be prohibitive.

WO2004/054117 discloses a power line communications system comprising network elements, including a bypass device.

### Summary of the Invention

A first aspect of the invention provides a consumer side power and data transmissions terminal (PDTT) according to claim 1 of the appended set of claims. Preferred embodiments are defined in the dependent claims.

The embodiments set forth hereinafter are intended to cover all classifications of voltage in all countries, and the system is intended to work with all domestic and commercial voltage requirements worldwide. For the purpose of this document, UK voltage standards will be used as an example and, for the purpose of this document: i) High voltage means >600v; ii) Medium voltage means 10v-240v; iii) Low voltage means <10v; iv) company side means supplier side (generally outside the building); and v) customer side means consumer side (generally inside the building)

The 'outlet addressed' elements referred to hereinafter are intended to cover all examples of electrical power outlets, including but not limited to fixed wall outlets, light fittings, electrical spurs and transition points and nodes, where the intention is to communicate with the outlet and powerline. The outlet addressed element can be an electronic circuit designed to work in conjunction with a power outlet or to fit into a power outlet, or a power outlet with an electronic circuit already fitted.

The 'device addressed' elements referred to hereinafter are intended to be fitted to all types of consumer equipment, including but not restricted to televisions, ovens, locks, refrigerators cameras, where the intention is to 'network' the device or communicate with the device through a power cable.

For the purpose of this document outlet addressed elements are designated as follows: Class A are appliance circuit outlets controlling for example electrical wall outlets; Class B are lighting circuit outlets controlling for example light fittings; and Class C are device outlets designed to work in conjunction with appliances, e.g. TV equipment.

A major problem that the system of the preferred embodiments solves is that they integrate different types of functionality including inter alia datacomms and energy monitoring together in one multifunctional system. Unifying these functions provides the application drivers to develop new algorithms that, in the energy monitoring system for example, recognise different appliances when they are attached to the powerline. In turn this allows us to make intelligent on/off decisions for the user. The system can understand when a device is on standby for example and turn it off to save energy or when an appliance is unsafe and turn it off to avert appliance damage and or fire. The unifying of energy monitoring, energy control, data communications and audio/video communications has facilitated the design of an extraordinarily powerful and radical multi functional system.

The transmission router is in use located between at least two different low level data sources allowing multi source transmissions to be received and conveyed to a single comms chipset. This configuration enables construction of a truly multifunctional and very powerful system.

Preferably the system has a control panel that has a User Interface combined with a Microprocessor that translates the information provided by the sockets into user friendly, preferably graphical, information, and operability. User-centric software/ algorithms for each application forms part of the system and increase its functionality. Each of the functions provides synergy to the other. Energy monitoring and control, for example, allows us to develop algorithms that can make decisions which allow the system itself to save energy without human intervention and provides a much more powerful smart metering product.

The control panel User Interface provides the face of, and improves and adds to the functionality of each of the applications. Information on data transfer through the communications network for example can be accessed and controlled through the User Interface, different source transmissions can be routed to different areas and appliances and a myriad other tasks can be performed in a very simple way. The control panel solves the problem of fragmented and difficult to access information by putting all the information and control in one place in a user friendly way. This interface and associated processor represent further aspects of the embodiments in their own right separately of the Power and Data transmission terminal.

The system has power and data transmission terminals that take the place of conventional electrical power sockets and switches. It is a digitally and manually controllable fixed terminal hub that serves as a connection point for electrical transmissions, data transmissions, video and audio transmissions. A typical terminal is a wall or floor-mounted / fixed position electrical plug socket or switch unit. It suitably comprises: at least two of Electrical, RJ45, USB and Telecom interfaces, or any combination thereof; a powerline communications transceiver and or a wireless communications transceiver. The terminal is capable of transmitting power to any attached appliance and broadcasting multi sourced data, audio and video over the powerline or wirelessly. Alternatively the transmission terminal may be attached to the powerline through a power cord.

The system incorporating the power and data transmission terminal brings central and local control together in a multifaceted system suitably presented on an intuitive User Interface. The Interface provides top down information and control - from a graphical display showing whole building energy consumption, cost and overall diagnostics, through floor and/or room views down to individual appliances showing the name of the appliance and diagnostics i.e that the appliance is functioning well, the user can drill down to any malfunctioning appliance anywhere in the building.

History functions and average appliance consumption functions can be monitored by a processor and linked database of the system and provide instant, easy to comprehend information that allows the user to react rapidly to changing appliance or user situations and mitigate at the very earliest opportunity any appliance or human anomalies or changed circumstance.

This type of dynamic system solves many problems. Users do not have to switch off sockets individually, one touch on the user interface closes everything down, or according to the program set, automatically when you are in bed.

The networked system is suitably a LAN. A particularly preferred MAC (Media Access Control) addressable power outlet is a power socket of mains supply in a building. This is suitably at 240V or less. Another preferred MAC addressable power outlet is a light fitting of mains supply in a building. Outlets suitably comprise an electronic circuit with TCP/ IP (or equivalent protocol) unique MAC addressable chip or chipset and microprocessor that enables them to be addressed by fixed addressing or roaming addressing. The MAC addressable power outlet thus has a unique MAC address in use and can be communicated with. Diverse electrical switches and transition points may also be provided with a similar outlet addressed circuit.

In preferred embodiments, there is provided a networked system of cable and interconnects to carry electrical power and data the system being adapted to monitor, control and manage the power and having means to provide information on the voltage and electrical current being transmitted by the electrical network or on the power being drawn at an outlet, switch or transition point to a microprocessor/controller (intelligent 'chipset').

The system suitably carries medium or low voltage electrical power, the term medium voltage as used herein meaning less than 600V single phase (or less than 600V per phase for a triple phase power supply) and for most uses the voltage is 240V or less, e.g. 110V or other national or regional standard equivalent mains voltage used at the consumer end in domestic, commercial or office premises.

In general, the system may have any topology. It could be a 'single structure system' and may optionally use multi-conductors. The system can comprise any modular system of transmission media and interconnects able to carry power and data.

The system may be a conjoined network or system of interconnects and device outlets, to propagate and or transmit medium voltage electrical energy or a modular system of transmission, interconnects and device outlets to transmit energy and data and or telecom signals over a single circuit, or a structure encompassing multiple circuits, screened or unscreened with or without an earth component whether employing the principle of Ethernet over Power or any other principle to transmit data and power.

### Brief Description of the Drawings

Preferred embodiments of the present invention will now be more particularly described by way of example and with reference to the accompanying drawings, wherein:
Preferred embodiments of the present invention will now be more particularly described by way of example and with reference to the accompanying drawings, wherein:
   Figure 1 is a schematic system architecture diagram showing a system embodying the invention as installed in a two-story residential dwelling;
   **Figure 2A** is a perspective view of an example appearance of an example outlet (electrical plug socket) having an integrated communications access point;
   **Figure 2B** is a perspective view of an outlet (electrical plug socket) that optionally also has an integrated communications access point but distinctively has an integrated ammeter;
   **Figure 2C** is a perspective view of an outlet (electrical plug socket) that is of an example 146x86 electrical socket hub type and has an integrated communications access socket for data cabling plus an integrated wireless communications facility;
   **Figure 2D** is a perspective view of an outlet (electrical plug socket) that optionally also has an integrated communications access point but distinctively has an integrated ammeter or power meter;
   **Figure 3A** is a schematic diagram of a circuit element comprising an addressable load detection module within a 'standard' mains supply outlet and which functions to monitor, store and transmit load usage data at the outlet point;
   **Figure 3B** is a schematic diagram of a variant of the Figure 3A circuit element extended to have a remote switching capability whereby the element can monitor, store and transmit load usage data at the outlet point and receive and implement switch activation data;
   **Figure 3C** is a schematic diagram of a variant of the Figure 3A or B circuit element extended to have a real-time digital display capability and whereby a fascia mounted display facility can display current and/or power usage and/ or outlet identification;
   **Figure 3D** is a schematic diagram of a variant of the Figure 3A or B or C circuit element extended to have flexible transmission capability and whereby it can monitor, store and transmit load usage data at the outlet point and receive and implement control activation data;
   **Figures 4A-C** are Addressable Outlet application systems diagrams, wherein **Figure 4A** is for a small single phase system (domestic / small commercial) with a single distribution board, **Figure 4B** is for a medium to large, multi-zoned integral system that is multi-zonal by defined areas, floors, integral units simultaneously serviced by the same power supply, and **Figure 4C** is for a multi-site remote management system; and

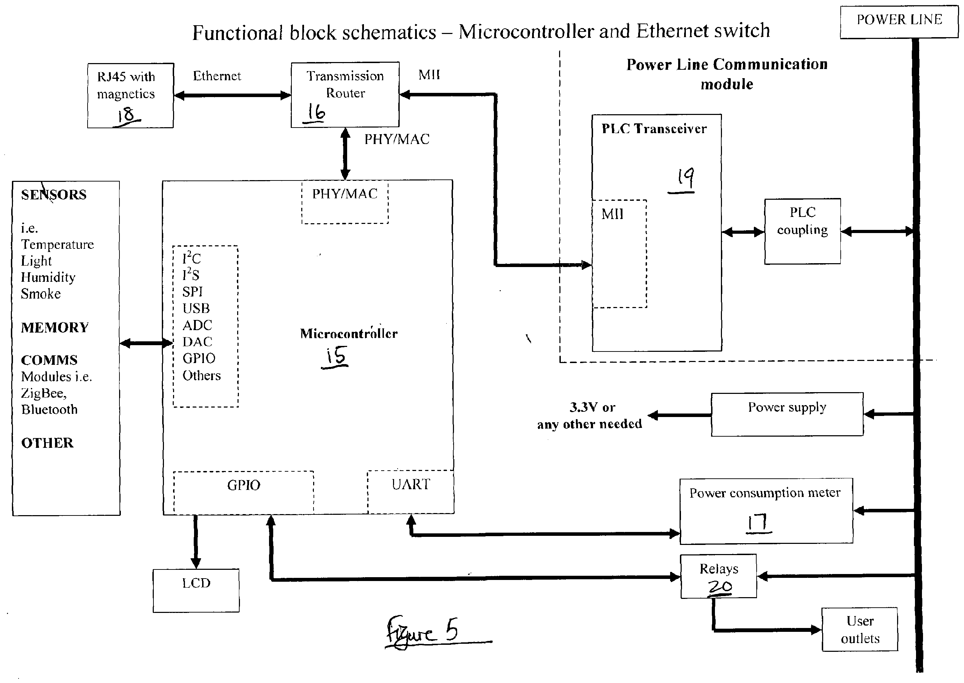

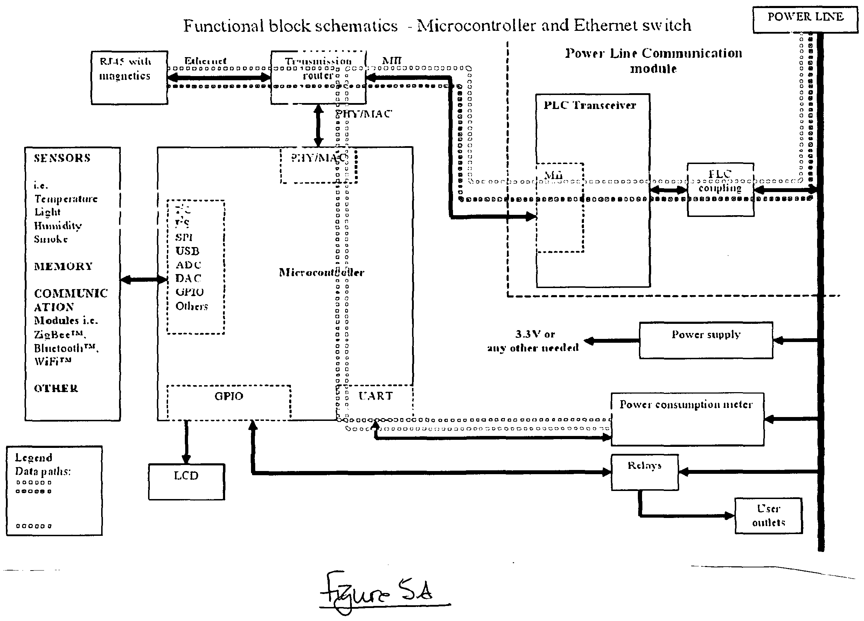

   **Figure 5** is a functional block schematic diagram of the key features of the power and data transmission terminal of a preferred embodiment of the primary aspect of the present invention and shows the arrangement of the microcontroller 15, transmission router 16, power consumption meter 17, Ethernet input port/ data interface 18, PLC (Power Line Communication) transceiver 19 and control relays 20; and
   **Figure 5A** corresponds to Figure 5 but illustrates signal flows of the power and data transmission terminal by different coloured flow-lines.

### Description of the Preferred Embodiments

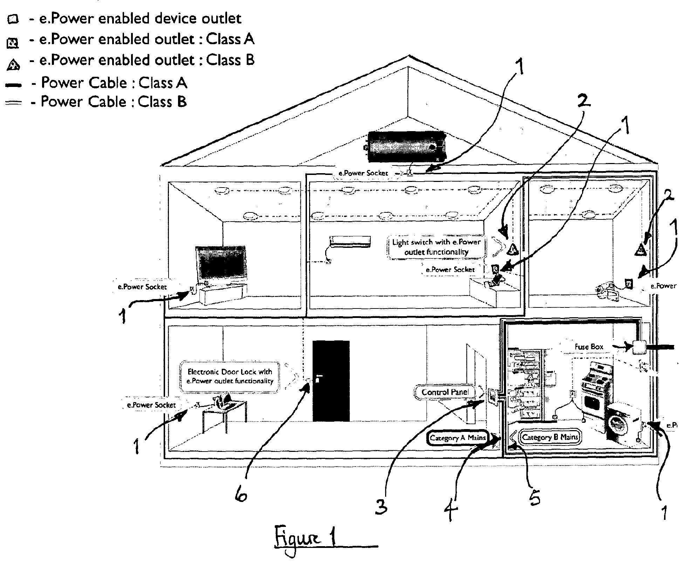

Referring firstly to Figure 1, this shows an example system embodying the invention as installed in a two-storey residential dwelling. This has a plurality of power sockets 1 for electrical plugs that are modified to be MAC addressable. These are the 'Class A' IP addressable outlets and are linked by the corresponding 'Class A' power cabling 4. In addition to these 'Class A' IP addressable outlets 1 there are 'Class B' IP addressable outlets including those that use the lighting circuit such as the IP addressable light switches 2 illustrated in Figure 1. A control panel 3 is provided to give control over the system and may, for example, allow control of doors to close/ lock, lights to be monitored and turned off if not needed, power sockets the same et cetera. The locking of doors may use corresponding IP addressable door lock outlets 6.

To serve as examples of the 'Class A' IP addressable outlets embodying the first aspect of the present invention nine variants of such outlets will now be described.

### 1) Basic MAC or physical addressable outlet

This may be a (fixed) medium voltage electrical wall outlet, floor outlet, electrical 'bus bar' or modular system outlet, transition or termination point or nodal point, or any other type of consumer side electrical outlet or switch. It may be a singular or plural outlet.

The electrical outlet has a Network Interface TCP/ I.P (or equivalent protocol) unique MAC addressable chip or chipset designed to communicate with other devices over any medium voltage electrical transmission media. The communication may be by using Power Line Connectivity. Alternatively a communication may be by: any other physical layer (1) standard of OSI model such as, but not limited to, Fibre, Coaxial or Twisted Pair; and data link layer (2) standard of the OSI model such as but not limited to Ethernet, token ring or any Wireless Access Platform for Electronic Communications Services Management (WAPECS) band or Bluetooth or any other wireless communication standard. In general a primary object of transmitting the framed packets is to control the outlets and to provide information on the medium voltage power being propagated. The purpose of the MAC addressable chipset therefore is to act as a communication gateway between a remote PC or Control Panel or command centre and the outlet substance or hardware described herein.

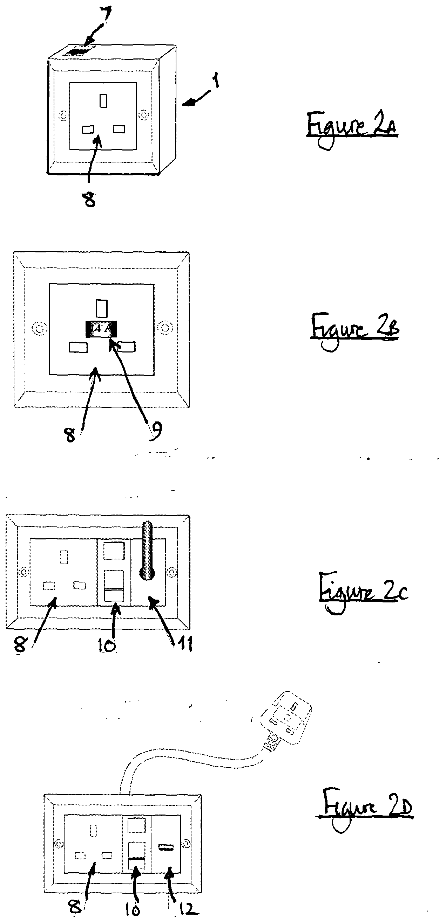

The power outlet described would preferably incorporate any type of access port or interface such as, but not limited to RJ45, USB or any other type of connection interface. An example of the outlet with interface/ communications' access point 7 above the power plug socket 8 is illustrated in Figure 2A. The interface allows a PC or any other appliance to access and communicate or make or receive a transmission of any description (other than power itself) through the powerline

### 2) MAC addressable outlet with modulator

In a refinement of the first category of MAC addressable outlet, in the second category the outlet of the first category, either singly or in plurality, is modified to incorporate a modulation device designed to modulate /demodulate low voltage framed packet communication signals in a manner that allows the signals to be injected, transmitted, received, routed, amplified or otherwise dealt with and transmitted. The data packet is modulated/ demodulated in such a way that it may be transmitted between a medium voltage (as defined earlier) electrical power-line and any device or transmission media defined as part of the physical layer (1) standard of OSI model such as but not limited to Fibre, Coaxial or Twisted Pair, and data link layer (2) standard of the OSI model such as but not limited to Ethernet and token ring or any Wireless Access Platform for Electronic Communications Services Management (WAPECS) band or Bluetooth or any other wireless communication standard where the packet is dealt with as low voltage.

### 3) MAC addressable outlet with ammeter/powermeter

In a third category the MAC addressable electrical outlet as described in 1&2 above, jointly, singly or in plurality incorporates an ammeter or powermeter (ammeter in conjunction with voltmeter) information from which may be provided on a display 9 (in any format, e.g. graphically or numerically) as illustrated in Figure 2B. The powermeter may also incorporate or work in conjunction with an ohmmeter or any other type of electrical sensor or meter whose function is to provide information on electrical values or characteristics, a primary purpose of which is to measure and detect powerline/outlet performance changes in order to diagnose potential problems and to detect changes in appliance power usage e.g. when a device goes on standby

### 4) MAC addressable outlet that incorporates a switched relay

In a fourth category the MAC addressable electrical outlet as described in 1&2 and 3 jointly, singly or in plurality, incorporates a relay whose function is to enable or disable the host electrical outlet as described in 1,2, and 3 either jointly, singly or in plurality at a command or pre-programmed prompt from a remote device or from within the host outlet.

### 5.) MAC addressable outlet that incorporates a Temperature sensor

In a Fifth category the MAC addressable electrical outlet as described in 1,2,3 and 4 above, jointly, singly or in plurality incorporates temperature sensors and or humidity sensors and or smoke sensors singly or in plurality whose function is to provide information on temperature / humidity / smoke presence within the socket and or externally to the socket.

### 6) MAC addressable outlet that incorporates an audio speaker

In a Sixth category the MAC addressable electrical outlet as described in 1,2,3,4 and 5 above, jointly, singly or in plurality incorporates a loudspeaker whose function is to emit audio signals upon predetermined commands from the electronic circuit within the host outlet, or upon real time commands from a remote device.

### 7) MAC addressable outlet that incorporates a microprocessor or controller

In a Seventh category the MAC addressable electrical outlet as described in 1,2,3,4,5 and 6 above, jointly, singly or in plurality incorporates a microprocessor or controller in conjunction with an internal or external memory whose function is to receive information from and or provide information or commands to any of the substance within the MAC addressable outlet described in 1,2,3,4,5 and 6 above The function of the microcontroller is to provide the central intelligence to the outlet, to communicate the commands that provide the functionality to the outlet

### 8) Electrical outlet conjoined with MAC addressed node or hub of nodes

In an eighth category the electrical outlet is a medium voltage electrical outlet either singly or in plurality incorporating or in conjunction with any type of communication node or point such as but not limited to data, telecom, audio or video outlet, point or node or any communication transition, termination or nodal point, or hub of points where the point or hub of points incorporates a Network Interface with TCP/ I.P (or equivalent protocol) uniquely MAC addressable chipset. Again this is designed to communicate with other devices on a physical layer (1) standard of OSI model such as but not limited to Fibre, Coaxial or Twisted Pair; and data link layer (2) standard of the OSI model such as but not limited to Ethernet and token ring or any Wireless Access Platform for Electronic Communications Services Management (WAPECS) band or Bluetooth or any other wireless communication standard where the MAC addressed node described can communicate with and or provide information on the electrical outlet in any way or lend it's address to the electrical outlet in any way or provide or facilitate any of the functionality covered by this application. Figure 2C illustrates an example such outlet where the power plug socket 8 has an adjacent port or display 10 for data and a wireless communications facility 11.

### 9) MAC addressed node or hub of nodes conjoined with Electrical outlet via cable or connective pins

In a ninth category is an independent communication point either singly or as part of a hub of outlet devices, nodes or transition points as in the 8th category and designed to plug directly or indirectly into a medium voltage electrical outlet or point either through electrical pins, contacts or any conductive structure of any sort. Again the latter may include any cable or medium that forms part of the physical layer (1) standard of OSI model such as but not limited to medium voltage power, Fibre, Coaxial or Twisted Pair cable, and or data link layer (2) standard of the OSI model such as but not limited to Ethernet, token ring or any Wireless Access Platform for Electronic Communications Services Management (WAPECS) band or Bluetooth or any other wireless communication or any physical layer (1). The interconnected independent communication point can thereby lend its 'address' to the interconnected electrical outlet or point and or provide information on or send signals to or receive signals from the electrical outlet or point or provide information on the electrical outlet in any way and or provide for any of the functionality covered by this application. Figure 2D illustrates an example such outlet as a hub device with a cord-set and plug and where the power plug socket 8 has an adjacent display or port 10 for data and a USB port 12.

A range of different Class B IP addressable outlets embodying the first aspect of the present invention will now be described by way of example.

### 1) Basic MAC addressable outlet

This may be a (fixed) medium voltage electrical light fitting or outlet, electrical 'bus bar' or modular light fitting or outlet, transition or termination point or nodal point, or any other type of light fitting or switch. It may be a singular or plural outlet. The electrical outlet has a Network Interface such as (but not limited to) an RJ45 or USB socket and an electronic circuit containing a TCP/ I.P (or equivalent protocol) unique MAC addressable chip or chipset designed to communicate with other devices over any medium voltage electrical transmission media. The communication may be by using Power Line Connectivity. Alternatively a communication may be by any other physical layer (1) standard of OSI model such as, but not limited to, Fibre, Coaxial or Twisted Pair cable and data link layer (2) standard of the OSI model such as but not limited to Ethernet, token ring or any Wireless Access Platform or Electronic Communications Services Management (WAPECS) band or Bluetooth or infra red or any other wireless communication standard. In general a primary objective of transmitting the framed packets is to control the outlets and provide information on the medium voltage power being propagated. The purpose of the Mac addressable chipset therefore is to act as a communication gateway between a remote PC or Control Panel or command centre and the outlet substance designed herein.

### 2) MAC addressable outlet with ammeter/powermeter

In a second category the MAC addressable electrical outlet as described in 1 above singly or in plurality incorporates an ammeter or powermeter (ammeter in conjunction with a voltmeter). The powermeter may also incorporate or work in conjunction with an ohmmeter or any other type of electrical sensor or meter whose function is to provide information on electrical values or characteristics, a primary purpose of which is to measure and detect powerline/outlet performance changes in order diagnose potential problems and to detect changes in appliance power usage e.g when a device goes on standby.

### 3) MAC addressable outlet that incorporates a switched relay

In a third category the MAC addressable electrical outlet as described in 1 and 2 above jointly, singly or in plurality, incorporates a relay (and where it exists an ammeter or powermeter), whose function is to enable or disable the host electrical outlet as described in 1 and 2 either jointly, singly or in plurality at a command or pre-programmed prompt from a remote device or from within the host outlet.

### 4 ) MAC addressable outlet that incorporates a Temperature sensor

In a fourth category the MAC addressable electrical outlet as described in 1,2 and 3 above, jointly, singly or in plurality incorporates temperature and or humidity sensors and or smoke sensors singly or in plurality whose function is to provide information on temperature / humidity / smoke presence within the outlet and or externally to it.

### 5) MAC addressable outlet that incorporates an audio speaker

In a fifth category the MAC addressable electrical outlet as described in 1,2,3 and 4 above, jointly, singly or in plurality incorporates an audio speaker whose function is to emit audio signals upon predetermined commands from the electronic circuit within the host outlet, or upon real time commands from a remote device.

### 6) MAC addressable outlet that incorporates a microprocessor or controller

In a sixth category the MAC addressable electrical outlet as described in 1,2,3,4,and 5 above, jointly, singly or in plurality incorporates a microcontroller in conjunction with an internal or external memory whose function is to receive information from and or provide information or commands to any of the substance / hardware within the MAC addressable outlet described in 1,2,3,4,and 5 above. The function of the microcontroller is to provide the central intelligence to the outlet, to communicate the commands that provide the functionality to the outlet.

### Device Outlets

The electrical network reaches the heart of every appliance. The function of device outlets is to communicate with those appliances through the powerline. Device outlets will vary according each appliance that it serves. There will now be described a typical Device Outlet.

The Device Outlet is an electronic circuit containing a modulation device designed to modulate /demodulate low voltage framed packet communication signals in a manner that allows the signals to be injected, transmitted, received, routed, amplified or otherwise dealt with and transmitted. The data packet is modulated/ demodulated in such a way that it may be transmitted between a medium voltage (as defined earlier) electrical power-line and any device where the framed packet is transmitted or received as low voltage. The electronic circuit will also contain a Network Interface with a TCP/ I.P (or equivalent protocol) unique MAC addressable chip or chipset. The electronic circuit will be designed to communicate with other devices over any medium voltage electrical transmission media. The communication may be by using Power Line Communications, alternatively the communication may be by any other physical layer (1) standard of OSI model such as, but not limited to, Fibre, Coaxial or Twisted Pair; and data link layer (2) standard of the OSI model such as but not limited to Ethernet, token ring or any Wireless Access Platform for Electronic Communications Services Management (WAPECS) band or Bluetooth or infra red or any other wireless communication standard. In general a primary object of transmitting the framed packets is to communicate with the control panel of the host appliance and or to 'network' the appliance to other appliances.

There are now described a number of connective elements that may form part of the system:

### 1) Patch leads

A patch lead is preferably an interconnect cable designed to transmit a low voltage MAC addressed data packet emitted from a 'networkable' device such as but not restricted to a PC, Data or VOIP (Voice Over Internet) Switch, Telephone or any other device that forms part of the physical layer (1) of the OSI model and data link layer (2) standard of the OSI model such as but not limited to Ethernet and being sent to a medium voltage power-line or device or vice-versa, where the interconnect cable incorporates a modulation device designed to modulate/demodulate framed packet communication signals in a manner that allows the signals to be injected, received, routed, amplified, transmitted or be otherwise dealt with between the medium voltage electrical power-line or device and the 'networkable' device designed to deal with the packet as a low voltage transmission.

### 2) I/O Modulator

A further component of the system may comprise a modulation device designed to modulate /demodulate framed packet communication signals in a manner that allows the signals to be injected, received, routed, amplified, transmitted or be otherwise dealt with between a medium voltage electrical power-line outlet or device and a 'networkable' device such as but not restricted to a PC, Data or VOIP (Voice Over Internet) Switch, Telephone or any other device that forms part of the physical layer (1) and or data link layer (2) of the OSI model designed to deal with the packet as a low voltage transmission where the modulation device contains any type of In/Out interfaces or sockets including but not limited to RJ45, USB , COAX or any other type of physical connection.

### 3) I/O Modulator with integrated cable

A variant of the above is a modulation device designed to modulate /demodulate framed packet communication signals in a manner that allows the signals to be injected, received, routed, amplified, transmitted or be otherwise dealt with between a medium voltage electrical powerline, outlet or device and a 'networkable' device such as but not restricted to a PC, Switch, Telephone or any other device that forms part of the physical layer (1) of the OSI model and data link layer (2) standard of the OSI model designed to deal with the packet as a low voltage transmission where the modulation device contains any type of 'In / out' port or socket including but not limited to RJ45, USB or Coax or any other physical connection standard and an in / outgoing cable of any length terminated with any type of connective plug or physical connection including but not limited to RJ45, USB or Coax

### 4) NIC cards

The present invention also provides a Network Interface card or embedded network interface device forming part of the physical layer (1) of the OSI model that incorporates a modulation device designed to modulate /demodulate framed packet communication signals being transmitted to / received from a low voltage source so that they can be transmitted / received as medium voltage signals suitable for transmission on a medium voltage power-line.

### Transceivers/Switches/Routers/ bridges/hubs

### 5) Data Switch with modulator

The present invention also provides a Transceiver, Switch, Hub, Router, Bridge or any such type of device designed to modulate / demodulate framed packet voice, data or other communication signals in a manner that allows low voltage communication signals to be injected, transmitted, received, routed, amplified or otherwise dealt with between and betwixt a medium voltage electrical network as part of the physical layer (1) and data link layer (2) and or network layer (3) of the OSI model and diverse devises attached to the electrical network including but not limited to class A and B electrical outlets described herein, device outlets described herein, PC's,Telecom Switches (including VOIP), audio or video devices where the communication is dealt with as low voltage. The object of transmitting the framed packets is to provide information between and betwixt diverse devices attached to the medium voltage power line.)

### 6) Data Switch isolating medium voltage electrical current

The present invention also provides a Transceiver, Switch, Hub, Router, Bridge or any type of device designed to receive, transmit, route, amplify or otherwise deal with framed packet communication signals on a medium voltage electrical network as part of a physical layer (1) and data link layer (2) and or network layer (3) of the OSI model including but not limited to data, telecom (including VOIP), audio or video packets, where the Transceiver, Switch, Hub, Router, Bridge or device demodulates and isolates the framed packets from the electrical current being transmitted on the medium voltage power line and forms an 'electrical bridge' which may also incorporate a controller that can recognise noise and undesired signals affecting the comunication and filter out, cancel or otherwise remove them before re-modulating the framed packets for onward transmission on the medium voltage electrical power-line.

### 7) Data Switch with medium voltage capability

The present invention also provides a Transceiver, Switch, Hub, Router, Bridge or any type of device designed to receive, transmit, route, amplify or otherwise deal with framed packet communication signals on a medium voltage electrical network as part of a physical layer (1) and data link layer (2) and or network layer (3) of the OSI model, including but not limited to data, telecom (including VOIP) audio or video packets, where the Transceiver, Switch, Hub, Router, Bridge or other device works as an integrated part of the medium voltage physical layer and transmits, routes or otherwise deals with the medium voltage electrical current in conjunction with framed packet communications.

The initial preferred form of the system for offices/ commercial premises is as a Bus - Bar system ie a modular system of interconnecting conduit with built in copper conductors, designed to form a backbone and horizontal electrical distribution system. The purpose of the structure is deploy the ethernet over power cable topology to transmit power and data simultaneously. The benefit of such system is that different configurations, moves and changes of outlets can take place easily by simply disconnecting and reconnecting the Bus Bars in different configurations and this suits the purpose of the invention well. Domestic wiring systems are far less complex and the unique components of the system can be immediately supplanted directly onto existing wiring.

Where there is a need for transmission of large amounts of data a wholly new design and construction of bus bar will be deployed. There will now be described the new bus bar innovation

The preferred structure of the bus bar will be of thermoplastic structure containing at least three conductors whose purpose is to transmit electrical energy, either with or without an insulating or isolating covering of any description. The conductors will typically be of copper material but may be of any other type of material that can transmit or propagate electrical energy. The purpose of the conductors is to transmit electrical energy and data simultaneously. The centre of the electrical conductors will typically be hollow. The purpose of the hollow or void within the conductor is to transmit data simultaneously but separately to the power transmitted through the structure of the conductor. Data transmission can typically (but not exhaustively) be 'wireless', of any Wireless Access Platform or Electronic Communications Services Management (WAPECS) band or Bluetooth or infra red or any other wireless communication standard. However data may also be transmitted through the void over any other physical layer (1) standard of OSI model such as, but not limited to, Fibre, Coaxial or Twisted Pair; and data link layer (2) standard of the OSI model such as but not limited to Ethernet, token ring.

The system uniquely provides I. P addresses to the electrical outlets from which the devices run and in so doing it can communicate with electrical outlets themselves. Using our system it is possible to turn off or reduce power drawn at any branch or outlet on an electrical network to suit the specific needs of users from virtually any location.

A manager will be able to switch off a light on the top floor of Canary Wharf whilst having a cup of cappuccino in his favourite coffee shop or turn off the power being drawn by a vacuum cleaner that someone forgot to unplug, spot an intruder turning on a light or check for dangerous power surges, hotspots and fire hazards, all in the duration of that one cappuccino. In the event of an electrical fire, the system will be able to report the exact starting point and probable cause. The long winded , time consuming, energy audits now almost mandatory for companies in medium to large buildings can be conducted continuously and with consummate ease, since the present system enables reports to be produced at the touch of a button.

Anyone who has walked through a large commercial building or its Communications room late at night and observed the number of electrical devices drawing power needlessly can readily understand the impact that the invention has on wasted energy, cost savings on electricity and consequent financial health of a company and of course the ecological impact of the building. In fact as energy becomes more precious, sooner or later such a system will become mandatory.

In the domestic environment the system of the present invention will immediately facilitate the long awaited intelligent home. It can provide every home with an immediate secure communications network and use that network to control energy to domestic devices, whether digital or analogue. The system allows users to turn on the heating before they arrive home on a cold night and do a host of other simple tasks to make their lives easier and safer. The system can be programmed to turn on or shut an outlet down at specific time or when overloaded, detect inadequately earthed or other types of unsafe installations and switch off an outlet when it detects a device on standby.

Wider and more varied applications include that electricity providers can use a similar system to conserve power on a much wider basis and to remotely read client meters. 'Black Box' recorders can be provided which fire investigators could use to accurately pinpoint the course of electrical fire. The system will also provide early warning indicators in the event of electrical fire.

Telecoms benefit too, voice signals can be transmitted easily (in fact the rapid convergence of VOIP (Voice Over Internet Protocol)) lends itself absolutely to this seamless single transmission infrastructure, and since virtually all commercial handsets now require power, it would be readily available from the same media that carries its signal, negating the need for separate telephone and power connection leads.

The system of the present invention has the potential to reduce cabling needs in buildings (and perhaps in the urban area) by up to 75% in addition to its potential to radically reduce the carbon footprint of buildings. It has the power to cause a paradigm shift in the concept of energy management and communication transmission. A description of how the new intelligent multifunctional sockets combined with the User Interface has brought detailed energy monitoring and control together into one place to create a revolutionary smart meter, follows.

### Energy monitoring systems (smart meters)

Current systems offer energy consumption information on a whole building basis through an inductive core, or specific appliance information through adaptor devices plugged into the mains socket.

The problem with both types of devices is that the information provided is limited in its content to kwh consumed either at a whole building level or a specific appliance or number of appliances (depending on how many appliances can be attached to the adaptor) level.

The power meter in the present invention is able to measure power, phase, phase angle, frequency, volts, current and more. The User Interface displays consumption on a whole building basis, a room by room basis and an individual appliance basis and puts all the information in one place in an easy drill down format. Having all of the information in one place coupled with the depth of detailed information mined allows us to provide far more information, create algorithms that allow us to understand and recognise different appliances and appliance states which in turn facilitate intelligent decision making and many more functions that already make it the most powerful energy mitigating system in the smart meter space.

The addition of the control panel to the energy monitoring and digitally switchable sockets creates a smarter meter that can provide more energy mitigating functionality than any previous system. It may do any of the following:
1. provide status of every socket, on /off/ safe / unsafe /standby
2. provide warnings of unsafe or faulty appliances
3. recognise standby and unsafe situations and terminates energy to the attached appliance.
4. provide cost data, watts, kwh, and forecasts running costs of every appliance
5. aggregate appliance data to provide room data
6. aggregate room data to provide whole building data
7. provide real time graph of energy usage, for the whole building
8. provide real time graph of energy usage, for each room
9. provide real time graph of energy usage, for each appliance
10. recognise and defines appliances by name, e.g iron
11. provide instant one touch on/off control of any socket from the home screen.
12. provide multi cycle on/off programmable control of each socket
13.log user patterns and appliance behaviour patterns and provide information on deviation
14. make control decisions, based on the appliance state and user behaviour
15. provide simple one page programming/ re-programming of individual sockets right up to the whole building level.
16. classify each appliance and the whole building to international standard energy bands and provide information on how to reduce energy use and classification

The resulting system brings central and local control together in a multifaceted system presented on an intuitive User Interface. The Interface provides top down information and control - from a graphical display showing whole building energy consumption, cost and overall diagnostics, through floor and/or room views down to individual appliances showing the name of the appliance and diagnostics i.e that the appliance is functioning well, the user can drill down to any malfunctioning appliance anywhere in the bulding.

History functions and average appliance consumption functions can provide instant, easy to comprehend information that allows the user to react rapidly to changing appliance or user situations and mitigate at the very earliest opportunity any appliance or human anomalies or changed circumstance.

This type of dynamic system solves many problems and provides unique facilities, for example, that users do not have to switch off sockets individually, one touch on the user interface closes everything down, or according to the program set, automatically when the user is in bed.

### Additional Notes to the Figures

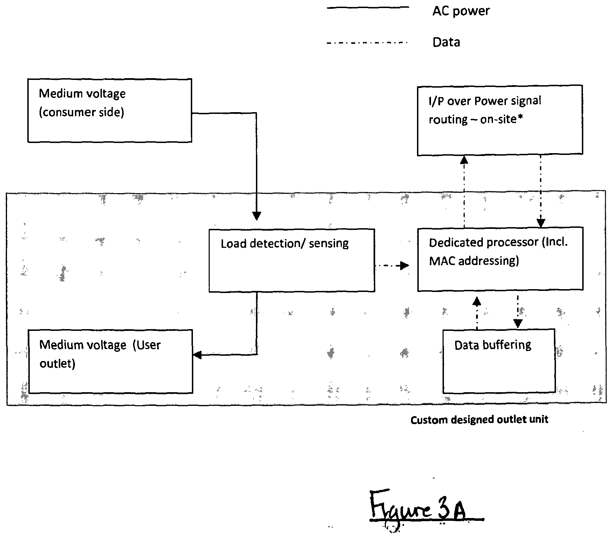

### Notes to Figure 3A

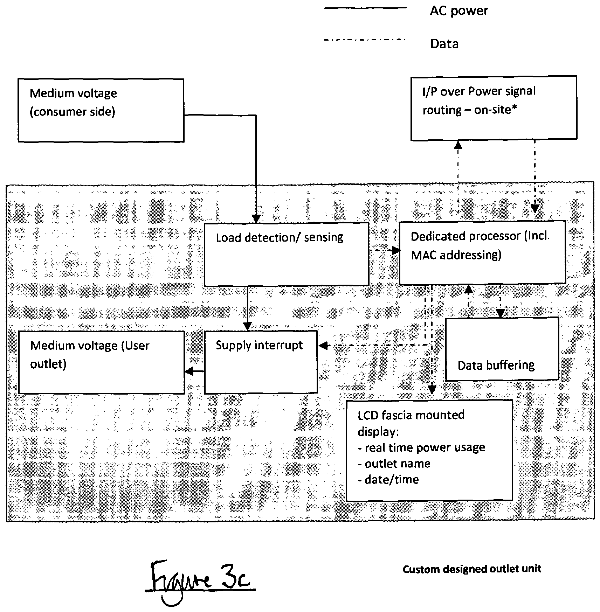

- Connection from power distribution unit (PDU) to user outlet, although sensed, is uninterrupted.
- May include fascia mounted display (see Figure 3C)
- * On-site reference to be read as the consumer-side medium voltage distributed system for the purposes of IP over Power direct connectivity
- Custom designed outlet refers to the incorporation of the components as described above - the footprint of the outlet will conform to existing standard outlets.
- May be an Integral Unit: part of a fixed installation or a Discrete Unit: demountable device to be plugged into an existing standard/ host outlet

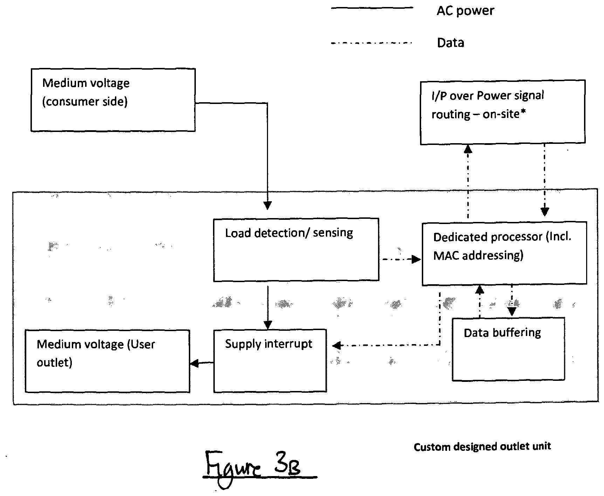

### Notes to Figure 3B

- *See Figure 3A
- May be an Integral Unit: part of a fixed installation or a Discrete Unit: demountable device to be plugged into an existing standard/ host outlet

### Notes to Figure 3C

- Display feature would equally apply to the unswitched outlet [Figure 3A]
- *See Figure 3A
- May be an Integral Unit: part of a fixed installation or a Discrete Unit: demountable device to be plugged into an existing standard standard/ host outlet

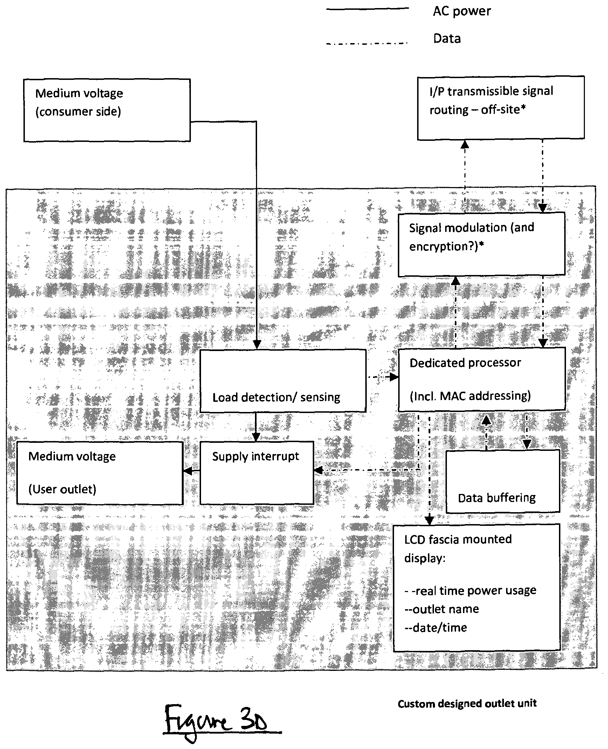

### Notes to Figure 3D

- Transmission may be wireless, hardwired (Cat6, Cat7 or Cat7+), optical or other.
- May be an Integral Unit: part of a fixed installation or a Discrete Unit: demountable device to be plugged into an existing standard outlet
- Off-site refers to that which is beyond the *electrical* connectivity of this configuration

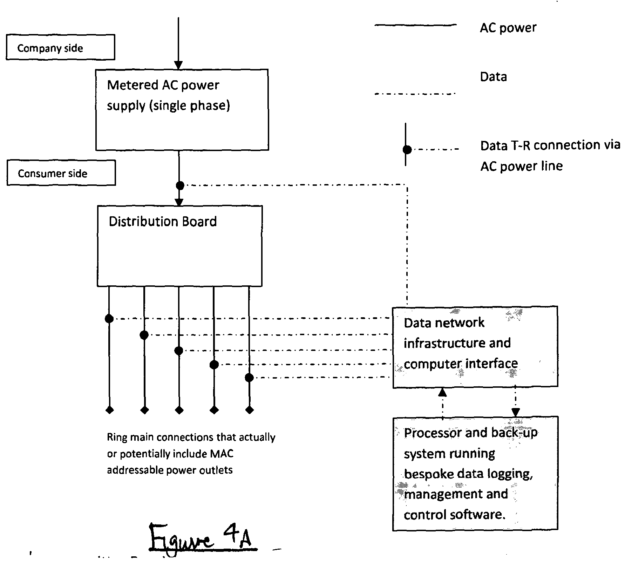

### Notes to Figure 4A

- Data transmitter-Receiver (T-R) connection to power 'field' made using existing technology. Similar connection required at power outlet points containing addressable module
- Data network infrastructure encompasses all forms of local shared data systems using wireless, hardwired (Cat6, Cat7 or Cat7+), optical or other connectivity. This is in addition to all integral hubs, switches and routers and processor/network interfacing
- Consumer side distribution system may also include addressable lighting systems that undergo similar treatment as the power outlets (with respect to load monitoring and supply switching)

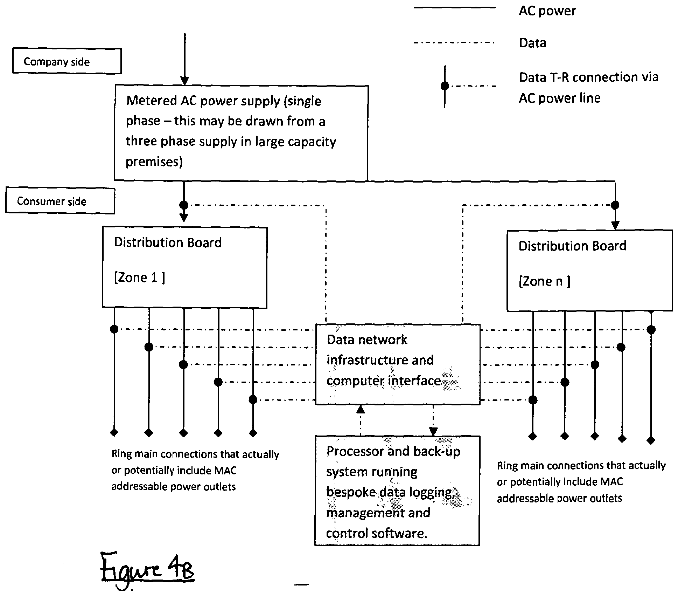

### Notes to Figure 4B

- Zones can be mapped to the Data Switch/Hub zones or to the power distribution zones (as shown above). If the former, power management by zone will be achieved via the software configuration.
- As stated previously, the system described does not preclude use of addressable modules within lighting systems powered from connected distribution boards. This is important since many medium to large installations distribute power discretely by power rating.

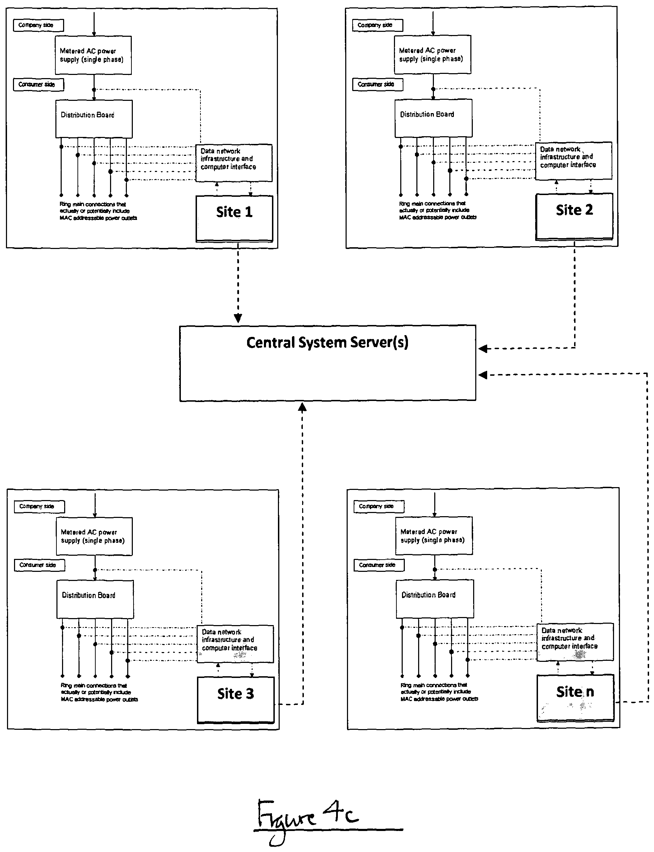

### Notes to Figure 4C

The remote sites in Fig 4C are of the form in Fig 4A. These sites may also be multi-zonal as described in Fig 4B and of course in any combination thereof.
- Each site would house a dedicated processor that would link to the central control point. The relationship of control management at the local and central levels would be a matter of client specification. It is likely that back-up systems would be deployed centrally and locally.
- All configurations of this strata are of a conventional data communications form and are illustrated here to illustrate scope.

## Claims

1. A consumer side power and data transmission terminal, PDTT, for use with a power line information and control system, PLICS, power outlet, switch or transition point, the PDTT comprising:
a PLC Transceiver (19) configured to transmit and receive data over a power-carrying medium,
a microcontroller (15),
a power consumption meter (17) connected to the microcontroller and configured to measure and provide information to the microcontroller on electrical values and/or characteristics of an electrical device connected to the PDTT,
a data interface (18),
**characterised in that** the PDTT is integrated and MAC addressable, and further comprising a transmission router (16) connected between the microcontroller and both the PLC Transceiver and the data interface thereby to selectively allow multi-directional data transfer between the devices connected thereto,
wherein the transmission router (16) is in use located between at least two different low level data sources allowing multi source transmissions to be received and conveyed to a single communications chipset.

2. A PDTT as claimed in claim 1, wherein the transmission router (16) receives signal inputs from the microcontroller (15).

3. A PDTT as claimed in claim 1 or claim 2, wherein the data interface (18) is a RJ45 data interface.

4. A PDTT as claimed in any preceding claim, further comprising one or more sensors connected to the microcontroller (15), including one or more of a temperature, light, humidity or smoke sensor, the one or more sensors being configured to transmit sensed data to the microcontroller (15) for onward transmission.

5. A PDTT as claimed in any preceding claim, further comprising one or more communications devices connected to the microcontroller (15), including one or more wireless communications devices, for multi-directional data transfer via the microcontroller (15).

6. A PDTT as claimed in any preceding claim, further comprising one or more relays (20) connected to the microcontroller (15), each relay (20) being configured to enable or disable a host electrical outlet in accordance with a command received via the microcontroller (15).

7. A PDTT as claimed in any preceding claim, further comprising a user interface to display information, including the electrical values or characteristics of an electrical device connected to the PDTT.

8. A PDTT as claimed in any preceding claim, configured to provide a digital and manually controllable fixed terminal hub that serves as a connection point for electrical transmissions, data transmissions, video and audio transmissions.

9. A PDTT as claimed in any preceding claim, further comprising at least two of: an electrical, RJ45, or USB interface connected to the microprocessor (15).

10. A PDTT as claimed in any preceding claim, provided as a wall or floor- mounted / electrical plug socket or switch unit or transition point.

11. A PDTT as claimed in any preceding claim, further configured to receive control signals from a remote control system and operable in response thereto to control an electrical device connected to the PDTT.

12. A power line information and control system, PLICS, configured to identify and communicate with each of a plurality of PDTTs according to any preceding claim by means of a unique address and to translate information received from each PDTT into user-readable data, including but not limited to the electrical values or characteristics from the power consumption meter of the PDTT, for display on a user interface.

13. A PLICS according to claim 12, further configured to display on the user interface power consumption on a whole building basis, a room-by-room basis and an individual appliance basis.

14. A PLICS according to claim 12 or claim 13, further configured to enable manual and/or automatic control of an electrical device connected to a PDTT in accordance with a predetermined algorithm.

15. A PLCS according to claim 14, configured to enable automatic control of an electrical device connected to a PDTT to switch off an electrical device connected to a PDTT when an overload, inadequate earth or other unsafe condition is detected in accordance with a predetermined algorithm.

## Patentansprüche

1. Verbrauchergerichteter Strom- und Datenübertragungsanschluss (power and data transmission terminal, PDTT), zur Verwendung mit einem Stromleitungsinformations- und Steuerungssystem, (power line information and control system, PLICS), Steckdose, Schalter oder Übergangspunkt, wobei das PDTT Folgendes umfasst:
einen PLC-Sendeempfänger (19), der konfiguriert ist, um Daten über ein stromführendes Medium zu übertragen und zu empfangen,
einen Mikrokontroller (15),
einen Stromverbrauchszähler (17), der an den Mikrocontroller angeschlossen ist und der konfiguriert ist, Informationen über elektrische Werte und/oder Eigenschaften eines elektrischen Geräts, das an das PDTT angeschlossen ist, zu messen und dem Mikrocontroller bereitzustellen, eine Datenschnittstelle (18),
**dadurch gekennzeichnet, dass** das PDTT integriert und MAC-adressierbar ist, und das es ferner einen Übertragungsrouter (16) umfasst, der zwischen dem Mikrocontroller und dem PLC-Sendeempfänger und der Datenschnittstelle angeschlossen ist, um eine multidirektionale Datenübertragung zwischen den daran angeschlossenen Geräten selektiv zu erlauben,
wobei sich der Übertragungsrouter (16) bei Gebrauch zwischen mindestens zwei unterschiedlichen Datenquellen auf niedrigen Ebenen befindet, um es Multiquellenübertragungen zu erlauben, empfangen zu werden und zu einem einzelnen Kommunikationschipsatz geleitet zu werden.

2. PDTT nach Anspruch 1, wobei der Übertragungsrouter (16) Signaleingänge von dem Mikrokontroller (15) empfängt.

3. PDTT nach Anspruch 1 oder Anspruch 2, wobei die Datenschnittstelle (18) eine RJ45-Datenschnittstelle ist.

4. PDTT nach einem der vorhergehenden Ansprüche, das ferner einen oder mehrere Sensoren umfasst, die an den Mikrokontroller (15) angeschlossen sind, einschließlich einem oder mehreren von einem Temperatur-, Licht-, Feuchtigkeits- oder Rauchsensor, wobei die einen oder mehrere Sensoren konfiguriert sind, um erfasste Daten zur Weiterleitung an den Mikrokontroller (15) zu übertragen.

5. PDTT nach einem der vorhergehenden Ansprüche, das ferner eine oder mehrere Kommunikationsgeräte umfasst, die an den Mikrokontroller (15) angeschlossen sind, einschließlich einem oder mehreren drahtlosen Kommunikationsgeräten für eine multidirektionale Datenübertragung über den Mikrokontroller (15).

6. PDTT nach einem der vorhergehenden Ansprüche, das ferner ein oder mehrere Relais (20) umfasst, die an den Mikrokontroller (15) angeschlossen sind, wobei jedes Relais (20) konfiguriert ist, um eine Host-Steckdose in Übereinstimmung mit einem Befehl, der über den Mikrokontroller (15) empfangen wurde, zu aktivieren oder deaktivieren.

7. PDTT nach einem der vorhergehenden Ansprüche, das ferner eine Benutzerschnittstelle umfasst, um Informationen anzuzeigen, einschließlich der elektrischen Werte oder Eigenschaften eines elektrischen Geräts, das an das PDTT angeschlossen ist.

8. PDTT nach einem der vorhergehenden Ansprüche, das konfiguriert ist, um einen digitalen und manuell steuerbaren festen Anschlussverteiler, der als ein Anschlusspunkt für elektrische Übertragungen, Datenübertragungen, Video- und Audioübertragungen dient.

9. PDTT nach einem der vorhergehenden Ansprüche, das ferner mindestens zwei der Folgenden umfasst: eine elektrische, RJ45- oder USB-Schnittstelle, die an den Mikroprozessor (15) angeschlossen ist.

10. PDTT nach einem der vorhergehenden Ansprüche, das ferner als ein(e) wandbefestigte(r) oder am Boden angebrachte(r)/Steckdose oder Schalteinheit oder Übergangspunkt vorgesehen ist.

11. PDTT nach einem der vorhergehenden Ansprüche, das ferner konfiguriert ist, um Steuersignale von einem Fernsteuerungssystem zu empfangen und betreibbar ist, um als Antwort darauf ein elektrisches Gerät zu steuern, das an das PDTT angeschlossen ist.

12. Stromleitungsinformations- und Steuerungssystem, (power line information and control system, PLICS),
das konfiguriert ist, um jede von einer Vielzahl von PDTTs über eine nach einem der vorhergehenden Ansprüche eindeutige Adresse zu identifizieren und mit ihnen zu kommunizieren und um Informationen, die von jedem PDTT empfangen werden, in benutzerlesbare Daten zu übersetzen einschließlich, aber nicht beschränkt auf die elektrischen Werte oder Eigenschaften des Stromverbrauchszähler des PDTT zur Anzeige auf einer Benutzerschnittstelle.

13. PLICS nach Anspruch 12, das ferner konfiguriert ist, um auf der Benutzerschnittstelle den Stromverbrauch auf der Grundlage eines gesamten Gebäudes, einzelner Räume und einer individuellen Anwendung anzuzeigen.

14. PLICS nach Anspruch 12 oder 13, das ferner konfiguriert ist, um in Übereinstimmung mit einem vorbestimmten Algorithmus eine manuelle und/oder automatische Steuerung eines elektrischen Geräts zu ermöglichen, das an das PDTT angeschlossen ist.

15. PLICS nach Anspruch 14, das konfiguriert ist, um eine automatische Steuerung eines elektrischen Gerätes zu ermöglichen, das an das PDTT angeschlossen ist, um ein elektrisches Gerät abzuschalten, das an das PDTT angeschlossen ist, wenn in Übereinstimmung mit einem vorbestimmten Algorithmus eine Überlast, unzureichende Masse oder andere unsichere Bedingungen erkannt wird.

## Revendications

1. Terminal de transmission d'énergie et de données côté consommateur, PDTT, utilisé avec un système d'information et de commande des lignes électriques, PLICS, une prise de courant, un commutateur, ou un point de transition, le PDTT comprenant :
un émetteur-récepteur PLC (19) configuré pour transmettre et recevoir des données par un support de transport d'énergie,
un microcontrôleur (15),
un compteur électrique (17) connecté à un microcontrôleur et configuré pour mesurer et fournir des informations au microcontrôleur sur des valeurs électriques et/ou des caractéristiques d'un dispositif électrique relié au PDTT, une interface de données (18),
**caractérisé en ce que** le PDTT est intégré et adressable MAC, et qu'il comprend en outre un routeur de transmission (16) connecté entre le microcontrôleur et à la fois l'émetteur-récepteur PLC et l'interface de données, afin de permettre de façon sélective le transfert de données multidirectionnelles entre les dispositifs qui y sont raccordés,
le routeur de transmission (16) étant utilisé entre au moins deux sources de données de bas niveau diverses, permettant la réception de transmissions de sources multiples, et leur transmission à un jeu de puces de communication unique.

2. PDTT selon la revendication 1, le routeur de transmission (16) recevant des entrées de signaux du microcontrôleur (15).

3. PDTT selon la revendication 1 ou la revendication 2, l'interface de données (18) étant une interface de données RJ45.

4. PDTT selon une quelconque des revendications précédentes, comprenant en outre un ou plusieurs capteurs connectés au microcontrôleur (15), y compris un ou plusieurs capteurs de température, lumière, humidité ou fumée, le ou plusieurs capteurs étant configurés pour transmettre des données détectées au microcontrôleur (15) pour leur retransmission.

5. PDTT selon une quelconque des revendications précédentes, comprenant en outre un ou plusieurs dispositifs de communication connectés à un microcontrôleur (15), y compris un ou plusieurs dispositifs de communication sans fils, pour un transfert de données multidirectionnel par le biais du microcontrôleur (15).

6. PDTT selon une quelconque des revendications précédentes, comprenant en outre un ou plusieurs relais (20) connectés à un microcontrôleur (15), chaque relais (20) étant configuré pour activer ou désactiver une prise de courant hôte conformément à une commande reçue par le biais du microcontrôleur (15).

7. PDTT selon une quelconque des revendications précédentes, comprenant en outre une interface utilisateur pour afficher des informations, y compris les valeurs ou caractéristiques électriques d'un appareil électrique raccordé au PDTT.

8. PDTT selon une quelconque des revendications précédentes, configuré pour constituer une plate-forme à terminal fixe et commande numérique ou manuelle, servant de point de connexion pour des transmissions électriques, des transmissions de données, et des transmissions vidéo et audio.

9. PDTT selon une quelconque des revendications précédentes, comprenant en outre au moins deux des suivants : une interface électrique, RJ45, ou USB, connectée à un microcontrôleur (15).

10. PDTT selon une quelconque des revendications précédentes, réalisé comme prise de courant, commutateur ou point de transition à montage mural ou au sol.

11. PDTT selon une quelconque des revendications précédentes, configuré en outre pour recevoir des signaux de commande d'un système de télécommande, et utilisable en réponse à ces derniers pour commander un appareil électrique connecté au PDTT.

12. Système d'information et de commande des lignes électriques, PLICS, configuré pour identifier et communiquer avec chacun d'une pluralité de PDTT selon une quelconque des revendications précédentes, par le biais d'une adresse unique, et de traduire des informations reçues de chaque PDTT en données lisibles par l'utilisateur, y compris, entre autres, les valeurs ou caractéristiques électriques provenant du compteur électrique du PDTT, pour leur affichage sur une interface utilisateur.

13. PLICS selon la revendication 12, configuré en outre pour afficher sur l'interface utilisateur la consommation pour l'ensemble du bâtiment, pièce par pièce, et par appareil électroménager individuel.

14. PLICS selon la revendication 12 ou la revendication 13, configuré en outre pour permettre la commande manuelle et/ou automatique d'un appareil électrique connecté à un PDTT conformément à un algorithme prédéterminé.

15. PLICS selon la revendication 14, configuré pour permettre la commande automatique d'un appareil électrique connecté à un PDTT pour désactiver un dispositif électrique connecté à un PDTT lors de la détection d'une surcharge, d'une terre insuffisante, ou de toute autre situation dangereuse conformément à un algorithme prédéterminé.
